# EUROPEAN PATENT APPLICATION

(11) **EP 4 451 369 A1**
(43) Date of publication of application: **23.10.2024**
(21) Application number: 24153869.3
(22) Date of filing: 25.01.2024
(51) Int. Cl.: H01M 4/136, H01M 4/36, H01M 4/38, H01M 4/58, H01M 6/18, H01M 10/36, H01M 4/02

(54) **FLUORIDE-ION BATTERY, NEGATIVE ELECTRODE ACTIVE MATERIAL FOR FLUORIDE-ION BATTERY, AND METHOD FOR MANUFACTURING NEGATIVE ELECTRODE ACTIVE MATERIAL FOR FLUORIDE-ION BATTERY**

(30) Priority: 24.03.2023 JP 2023048673
(71) Applicant: TOYOTA JIDOSHA KABUSHIKI KAISHA, Toyota-shi, Aichi-ken, 471-8571 (JP)
(72) Inventor: KOUSUKE, Noi, Toyota-shi, 471-8571 (JP)
(74) Representative: D Young & Co LLP

(57) **Abstract**

An object of the present disclosure is to provide a fluoride-ion battery capable of achieving high charge and discharge capacities. The fluoride-ion battery of the present disclosure comprises a positive electrode active material layer, a negative electrode active material layer, and an electrolyte layer formed between the positive electrode active material layer and the negative electrode active material layer. In the fluoride-ion battery of the present disclosure, the negative electrode active material layer contains metallic magnesium, magnesium fluoride, and calcium barium fluoride, wherein a mass ratio of metallic magnesium to magnesium fluoride is 0.1 to 10.0.

## Description

### FIELD

The present disclosure relates to a fluoride-ion battery, a negative electrode active material for a fluoride-ion battery, and a method for manufacturing a negative electrode active material for a fluoride-ion battery.

### BACKGROUND

Lithium-ion batteries, for example, are known as high-voltage and high-energy-density batteries. Lithium-ion batteries are cation-based batteries using lithium ions as carriers. In contrast, fluoride-ion batteries using fluoride ions as carriers are known as anion-based batteries.

For example, PTL 1 discloses a fluoride-ion battery comprising a negative electrode material containing a Mg material containing Mg element and a fluoride-ion conducting material containing at least one metallic element (excluding Mg element) and F element.

### [CITATION LIST]

### [PATENT LITERATURE]

[PTL 1] Japanese Unexamined Patent Publication (Kokai) No. 2022-123264

### SUMMARY

### [TECHNICAL PROBLEM]

There is a demand for achieving high charge and discharge capacities in fluoride-ion batteries.

An object of the present disclosure is to provide a fluoride-ion battery capable of achieving high charge and discharge capacities.

### [SOLUTION TO PROBLEM]

The present inventors have found that the above object can be achieved by the following means.

### <Aspect 1>

A fluoride-ion battery, comprising a positive electrode active material layer, a negative electrode active material layer, and an electrolyte layer formed between the positive electrode active material layer and the negative electrode active material layer, wherein
the negative electrode active material layer contains metallic magnesium, magnesium fluoride, and calcium barium fluoride, and
a mass ratio of the metallic magnesium to the magnesium fluoride is 0.1 to 10.0.

### <Aspect 2>

The fluoride-ion battery according to Aspect 1, wherein a ratio of a first FWHM (XRD half width) of a peak near 2θ = 40.4 deg. in an XRD spectrum of the magnesium fluoride to a second FWHM (XRD half width) of a peak near 2θ = 47.5 deg. in an XRD spectrum of NIST standard CeO2, measured using CuKa radiation, is 1.5 or greater.

### <Aspect 3>

The fluoride-ion battery according to Aspect 1 or 2, wherein the electrolyte layer comprises calcium barium fluoride.

### <Aspect 4>

The fluoride-ion battery according to any one of Aspects 1 to 3, wherein charge and discharge capacities are 100 mAh/g or more.

### <Aspect 5>

A negative electrode active material for a fluoride-ion battery, comprising magnesium fluoride, wherein
a ratio of a first FWHM (XRD half width) of a peak near 2θ = 40.4 deg. in an XRD spectrum of the magnesium fluoride to a second FWHM (XRD half width) of a peak near 2θ = 47.5 deg. in an XRD spectrum of NIST standard CeO2, measured using CuKa radiation, is 1.5 or greater.

### <Aspect 6>

A method for manufacturing the negative electrode active material according to Aspect 5, comprising applying mechanical impact to magnesium fluoride to change a ratio of a first FWHM (XRD half width) of a peak near 2θ = 40.4 deg. in an XRD spectrum of the magnesium fluoride to a second FWHM (XRD half width) of a peak near 2θ = 47.5 deg. in an XRD spectrum of NIST standard CeO2, measured using CuKa radiation, to 1.5 or greater.

### <Aspect 7>

The method according to Aspect 6, wherein the mechanical impact is applied by a ball mill.

### <Aspect 8>

The method according to Aspect 7, wherein a rotational speed of the ball mill is 300 rpm or more.

### [ADVANTAGEOUS EFFECTS OF INVENTION]

According to the present disclosure, a fluoride-ion battery capable of achieving high charge and discharge capacities can be provided.

### BRIEF DESCRIPTION OF DRAWINGS

FIG. 1 is a schematic diagram showing one example of the fluoride-ion battery of the present disclosure.
FIG. 2 is a graph showing charge-discharge curves of the fluoride-ion batteries of Examples 1 to 5.
FIG. 3 is a graph showing charge-discharge curves of the fluoride-ion batteries of Comparative Examples 1 to 4.
FIG. 4 is a graph showing charge-discharge curves of the fluoride-ion batteries of Examples 6 to 10 and Comparative Example 5.
FIG. 5 is a graph showing X-ray diffraction (XRD) patterns of Examples 4 and 6 to 10 and Comparative Example 5.
FIG. 6 is a graph showing an XRD pattern of standard CeO2 for FWHM ratio calculation.

### DESCRIPTION OF EMBODIMENTS

Hereinafter, embodiments of the present disclosure will be described in detail. The present disclosure is not limited to the following embodiments, and various modifications can be made within the scope of the disclosure.

### «Fluoride-ion battery»

The fluoride-ion battery of the present disclosure comprises a positive electrode active material layer, a negative electrode active material layer, and an electrolyte layer formed between the positive electrode active material layer and the negative electrode active material layer. In the fluoride-ion battery of the present disclosure, the negative electrode active material layer contains metallic magnesium, magnesium fluoride, and calcium barium fluoride, wherein a mass ratio of metallic magnesium to magnesium fluoride is 0.1 to 10.0.

By including calcium barium fluoride, metallic magnesium, and magnesium fluoride in the negative electrode active material layer and setting the mass ratio of metallic magnesium to magnesium fluoride to a predetermined range, a fluoride-ion battery comprising the negative electrode active material layer can achieve high charge and discharge capacities.

Although not intended to be bound by any theory, the reason therefor is believed to be as follows. Specifically, as a first-stage reaction during charging, magnesium fluoride is initially reacted to release fluoride ions and generate metallic magnesium. As a second-stage reaction, metallic magnesium in the negative electrode active material layer comprising the metallic magnesium generated in the first stage then forms an alloy with calcium and barium in calcium barium fluoride and releases fluoride ions. This reverse reaction during discharging causes the occlusion of fluoride ions. In other words, the fluoride-ion battery of the present disclosure is considered to be capable of achieving high charge and discharge capacities due to the occurrence of the two stages of release (charging) and occlusion (discharging) of fluoride ions. Further, it is considered that since the blended metallic magnesium also functions as an electron conductive aid to contribute the progression of efficient charging and discharging, the fluoride-ion battery of the present disclosure is capable of achieving high charge and discharge capacities.

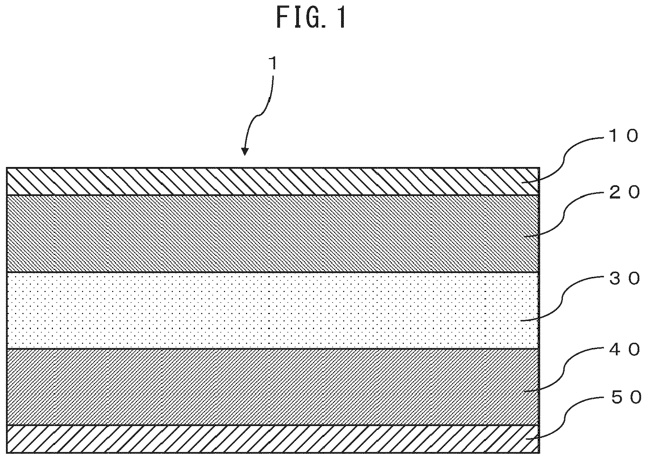

FIG. 1 is a schematic diagram showing one example of the fluoride-ion battery of the present disclosure. The fluoride-ion battery 1 shown in FIG. 1 comprises a positive electrode active material layer 20, a negative electrode active material layer 40, an electrolyte layer 30 formed between the positive electrode active material layer 20 and the negative electrode active material layer 40, a positive electrode current collector 10 for collecting current of the positive electrode active material layer 20, and a negative electrode current collector 50 for collecting current of the negative electrode active material layer 40.

The fluoride-ion battery of the present disclosure may be a liquid-based battery or a solid-state battery, particularly an all-solid-state battery. With regard to the present disclosure, a solid-state battery means a battery using a solid electrolyte. The fluoride-ion battery of the present disclosure may be a primary battery, or may be a secondary battery. Examples of the form of the fluoride-ion battery of the present disclosure include coin type, laminate type, cylindrical type, and rectangular type.

### <Negative electrode active material layer>

In the present disclosure, the negative electrode active material layer comprises metallic magnesium, magnesium fluoride, and calcium barium fluoride.

### (Metallic magnesium)

In the present disclosure, the negative electrode active material layer comprises metallic magnesium.

The blending ratio of metallic magnesium in the negative electrode active material layer is, for example, 1% by weight or greater and may be 3% by weight or greater, or may be 5% by weight or greater. The blending ratio of metallic magnesium is, for example, 55% by weight or less and may be 45% by weight or less, or may be 35% by weight or less.

### (Magnesium fluoride)

In the present disclosure, the negative electrode active material layer comprises magnesium fluoride (MgF₂). MgF₂ functions as a negative electrode active material.

In the present disclosure, the ratio (FWHMsam./FWHMref.) of the first FWHM (XRD half width) of the peak near 2θ = 40.4 deg. in the XRD spectrum of MgF₂ to the second FWHM (XRD half width) of the peak near 2θ = 47.5 deg. in the XRD spectrum of CeO2, measured using CuKa radiation, may be 1.5 or greater.

Crystallinity (crystallite size) is known to correlate with the peak half width FWHM (full width at half maximum) in XRD measurements. The smaller the FWHM, the higher the crystallinity (the large the crystallite size is). However, since the absolute value of calculated FWHM depends on the XRD measurement apparatus, conditions, and calculation method, the ratio of FWHMsam. of a sample (MgF₂ in the negative electrode active material layer) to FWHMref. of a reference material CeO₂ (distributed by the National Institute of Standards and Technology or NIST), which is measured and calculated in the same manner as the sample, is evaluated in the present disclosure. A smaller FWHMsam./FWHMref. represents higher crystallinity.

The FWHM is calculated individually for each peak in an XRD pattern. In the present disclosure, among the peaks derived from MgF₂ in the negative electrode active material layer as the sample, FWHMsam. is calculated for the peak on the MgF₂ (111) plane confirmed near 2θ of 40.4 deg. in a measurement using CuKa radiation, as a peak having a relatively high intensity and easily separated from other peaks. For the reference material, FWHMref. is calculated for the peak on the CeO2 (220) plane confirmed near 2θ of 47.5 deg.

The value of FWHMsam./FWHMref. is preferably 1.5 or greater, and more preferably 8 or greater. The value of FWHMsam./FWHMref. is preferably 10.0 or less, and more preferably 9.0 or less. When FWHMsam./FWHMref. is within the above range, the charge and discharge capacities of the fluoride-ion battery are improved.

Although not intended to be bound by any theory, the reason therefor is considered that when crystallinity of MgF₂ crystals is reduced (crystallite size is decreased), fluoride-ion diffusion length in the active material particles of MgF₂ is shortened, and charge and discharge reactions proceed efficiently.

The blending ratio of magnesium fluoride in the negative electrode active material layer is, for example, 1% by weight or greater and may be 3% by weight or greater, or may be 5% by weight or greater. The blending ratio of magnesium fluoride is, for example, 55% by weight or less and may be 45% by weight or less, or may be 35% by weight or less.

The mass ratio (Mg/MgF2) of metallic magnesium to magnesium fluoride is 0.1 to 10.0, and preferably 0.1 to 5.0. When Mg/MgF2 is within the above range, the charge and discharge capacities of the fluoride-ion battery can be increased.

### (Method for manufacturing negative electrode active material)

The method of the present disclosure for manufacturing a negative electrode active material for a fluoride-ion battery comprises applying mechanical impact to magnesium fluoride to change a ratio of the first FWHM (XRD half width) of the peak near 2θ = 40.4 deg. in the XRD spectrum of magnesium fluoride to the second FWHM (XRD half width) of the peak near 2θ = 47.5 deg. in the XRD spectrum of NIST standard CeO2, measured using CuKa radiation, to 1.5 or greater.

Examples of the method of applying mechanical impact include mechanical milling, and specifically include a ball mill. In this case, rotational speed of the ball mill and mixing time can be adjusted to control FWHMsam./FWHMref.

The rotational speed of the ball mill is, for example, 300 rpm or more, and preferably 400 rpm or more, or 600 rpm or less, and preferably 500 rpm or less.

The mixing with a ball mill can be carried out for a time period of, for example, 1 h or more, 2 h or more, or 3 h or more.

### (Calcium barium fluoride)

In the present disclosure, the negative electrode active material layer comprises calcium barium fluoride (Ca₁₋ₓBaₓF₂). Ca₁₋ₓBaₓF₂ also functions as a negative electrode active material. Specifically, a negative electrode active material is generated from Ca₁₋ₓBaₓF₂ in a self-forming manner.

Ca₁₋ₓBaₓF₂ can be obtained, for example, by mechanical milling of a mixture containing calcium fluoride (CaF₂) and barium fluoride (BaF₂). Examples of the means of mechanical milling can include, but are not particularly limited to, mixing with a ball mill.

The x in Ca₁₋ₓBaₓF₂ is not particularly limited as long as 0 < x < 1 is satisfied, and may be 0.30 or greater, may be 0.35 or greater, or may be 0.40 or greater. The x may be 0.70 or less, may be 0.65 or less, or may be 0.60 or less. Particularly, when x satisfies 0.45 ≤ x ≤ 0.65, a satisfactory reversible capacity is obtained.

The blending ratio of Ca₁₋ₓBaₓF₂ in the negative electrode active material layer is, for example 45% by weight or greater and may be 50% by weight or greater, or may be 55% by weight or greater. The blending ratio of Ca₁₋ₓBaₓF₂ is, for example, 75% by weight or less and may be 70% by weight or less, or may be 65% by weight or less.

### (Others)

The negative electrode active material layer of the present disclosure may further contain at least one of an electron conductive aid and a binder, if necessary. Examples of the electron conductive aid include carbon materials. Examples of the carbon material include carbon blacks such as acetylene black, Ketjen black, furnace black, and thermal black; graphene, fullerene, and carbon nanotubes. Examples of the binder include fluorine-based binders such as polyvinylidene fluoride (PVDF) and polytetrafluoroethylene (PTFE).

The thickness of the negative electrode active material layer is not particularly limited, and can be appropriately adjusted in accordance with the configuration of the battery.

### <Positive electrode active material layer>

The positive electrode active material layer of the present disclosure is a layer containing at least a positive electrode active material. The positive electrode active material layer may further contain at least one of an electron conductive aid and a binder, if necessary.

The positive electrode active material is generally an active material that is defluorinated during discharging. Examples of the positive electrode active material include elemental metals, alloys, metal oxides, and fluorides thereof. Examples of the metallic element contained in the positive electrode active material can include Cu, Ag, Ni, Co, Pb, Ce, Mn, Au, Pt, Rh, V, Os, Ru, Fe, Cr, Bi, Nb, Sb, Ti, Sn, and Zn. Of these, the positive electrode active material is preferably Cu, CuFz, Fe, FeFz, Ag, or AgFz. The z is a real number greater than 0. Additional examples of the positive electrode active material include carbon materials and fluorides thereof. Examples of the carbon materials include graphite, coke, and carbon nanotubes. Further additional examples of the positive electrode active material include polymer materials. Examples of the polymer materials include polyaniline, polypyrrole, polyacetylene, and polythiophene. Further additional examples of the positive electrode active material include metal sulfides. Examples of the metal sulfides include Cu2S, CuS, FeS, and FeS2.

The content of the positive electrode active material in the positive electrode active material layer is not particularly limited, but is preferably large from the viewpoint of capacity. The content of the positive electrode active material is, for example, 30% by weight or greater and may be 50% by weight or greater, or may be 70% by weight or greater.

The descriptions relating to the solid electrolyte layer of the present disclosure can be referenced regarding the solid electrolyte.

The descriptions relating to the negative electrode active material layer of the present disclosure can be referenced regarding the electron conductive aid and the binder.

The thickness of the positive electrode active material layer is not particularly limited, and can be appropriately adjusted in accordance with the configuration of the battery.

### <Electrolyte layer>

The electrolyte layer of the present disclosure is a layer formed between the positive electrode active material layer and the negative electrode active material layer.

When the fluoride-ion battery of the present disclosure is a liquid-based battery, the electrolyte layer can be composed of, for example, an electrolytic solution and an optional separator.

The electrolytic solution can contain, for example, a fluoride salt and an organic solvent. Examples of the fluoride salt can include inorganic fluoride salts, organic fluoride salts, and ionic liquids. As one example of the inorganic fluoride salt, XF (X is Li, Na, K, Rb, or Cs) can be included. As one example of the cation of the organic fluoride salt, an alkyl ammonium cation such as a tetramethylammonium cation can be included.

The organic solvent of the electrolytic solution is generally a solvent that dissolves a fluoride salt. Examples of the organic solvent can include glymes such as triethylene glycol dimethyl ether (G3) and tetraethylene glycol dimethyl ether (G4); cyclic carbonates such as ethylene carbonate (EC), fluoroethylene carbonate (FEC), difluoroethylene carbonate (DFEC), propylene carbonate (PC), and butylene carbonate (BC); and chain carbonates such as dimethyl carbonate (DMC), diethyl carbonate (DEC), and ethyl methyl carbonate (EMC). An ionic liquid may be used as the organic solvent.

The separator is not particularly limited as long as the composition thereof is composed to withstand the use range of a fluoride-ion battery. Examples of the separator can include polymeric nonwoven fabrics such as polypropylene nonwoven fabrics and polyethylene nonwoven fabrics; and microporous films of olefin-based resins such as polyethylene and polypropylene.

When the fluoride-ion battery of the present disclosure is a solid-state battery, the electrolyte layer may be, for example, a layer of a solid electrolyte. In this case, the electrolyte layer may further contain a binder, if necessary.

The solid electrolyte is not particularly limited as long as the material thereof can be used in a fluoride-ion battery, and is exemplified by inorganic fluorides. Examples of the inorganic fluoride include fluorides containing lanthanoid elements such as La and Ce; fluorides containing alkaline earth elements such as Ca, Sr, and Ba; fluorides containing Group 14 elements such as Pb and Sn; and fluorides containing alkali elements such as Li, Na, K, Rb, and Cs. The solid electrolyte is preferably Ca₁₋ₓBaₓF₂.

The descriptions relating to the negative electrode active material layer of the present disclosure can be referenced regarding the binder.

### <Additional configurations>

The fluoride-ion battery of the present disclosure preferably comprises a positive electrode current collector for collecting current of the positive electrode active material layer, a negative electrode current collector for collecting current of the negative electrode active material layer, and a battery case housing the members described above. Examples of the form of the current collectors include a foil, a mesh, and a porous material. A conventionally known battery case can be used as the battery case.

The charge and discharge capacities of the fluoride-ion battery of the present disclosure, as specific capacities normalized by the weight of the negative electrode mixture, can be 100 mAh/g or more.

### EXAMPLES

### <Example 1>

### (Production of negative electrode mixture)

CaF2 and BaF2 were prepared as raw materials and weighed so as to have a molar ratio of CaF₂:BaF₂ = 50:50. The weighed CaF₂ and BaF₂ were mixed by mechanical milling using a ball mill apparatus (planetary series ball mill premium line PL-7, manufactured by Fritsch GmbH) in a dry argon atmosphere at 600 rpm for 20 h, and the mixture was reacted to obtain Ca0.5Ba0.5F2 in a powder form.

Mg, MgF₂, the above Ca_{0.5}Ba_{0.5}F₂, and acetylene black (AB) as an electron conductive aid were weighed at the blending ratio (% by weight) indicated in Table 1 and mixed using a ball mill apparatus (planetary series ball mill premium line PL-7, manufactured by Fritsch GmbH) in a dry argon atmosphere at 600 rpm for 3 h to obtain a negative electrode mixture in a powder form.

### (Production of solid electrolyte)

CaF2 and BaF2 were prepared as raw materials and weighed so as to have a molar ratio of CaF₂:BaF₂ = 60:40. These were mixed by mechanical milling using a ball mill apparatus (planetary series ball mill premium line PL-7, manufactured by Fritsch GmbH) in a dry argon atmosphere at 600 rpm for 20 h, and the mixture was reacted to obtain a solid electrolyte (Ca0.6Ba0.4F2) in a powder form.

### (Production of fluoride-ion battery)

The following was used as the components of the fluoride-ion battery.
· Negative electrode current collector: platinum foil
· Negative electrode active material layer: green compact formed using 10 mg of the above negative electrode mixture powder
· Electrolyte layer: green compact formed using 100 mg of the above solid electrolyte powder
· Positive electrode active material layer: lead plate (220 mg)
· Positive electrode current collector: aluminum foil

The negative electrode current collector, negative electrode active material layer, electrolyte layer, positive electrode active material layer, and positive electrode current collector were laminated in this order to produce an all-solid-state fluoride-ion battery.

### <Examples 2 to 5 and Comparative Examples 1 to 4>

Except that the mass ratios of the negative electrode mixture were changed as indicated in Table 1, all-solid-state fluoride-ion batteries of Examples 2 to 5 and Comparative Examples 1 to 4 were produced in the same manner as in Example 1.

### <Charge-discharge test>

The fluoride-ion batteries of Examples 1 to 5 and Comparative Examples 1 to 4 were each charged and discharged once at a test temperature of 200 °C and a current density of 0.05 mA/cm² while evacuated in a sealed container. The end-of-charge voltage and end-of-discharge voltage were 2.7 V and 1.8 V, respectively. An electrochemical measurement system equipped with a frequency response analyzer (VMP-300 high-performance electrochemical measurement system, manufactured by Bio-Logic Science Instruments Ltd.) was used for the charge-discharge test.

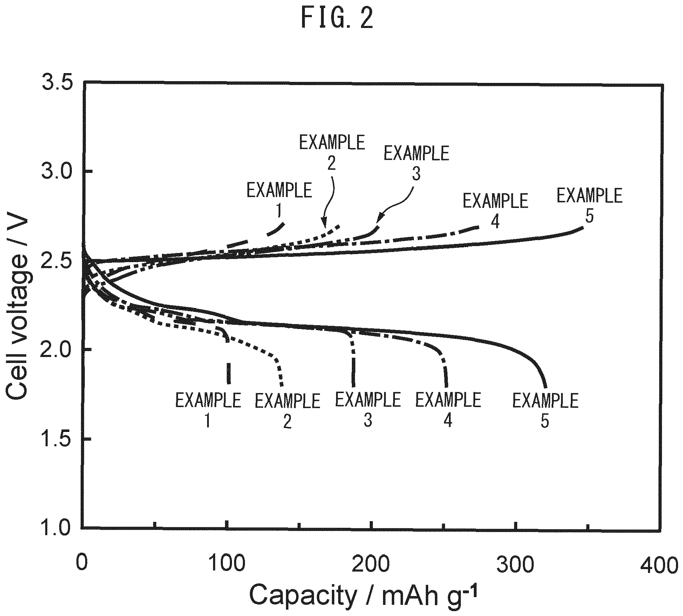

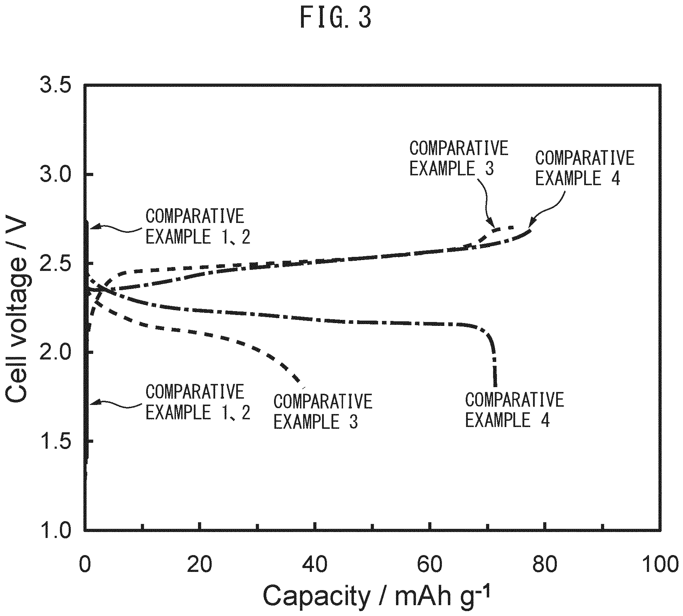

The results of the charge-discharge tests are shown in Table 1, FIG. 2 (Examples 1 to 5), and FIG. 3 (Comparative Examples 1 to 4). Note that the charge capacity and discharge capacity in each test are shown as specific capacities normalized by the weight of the negative electrode mixture.

**[Table 1]**

| Example | Mg/MgF₂ | Mg [%] | MgF₂ [%] | Ca_{0.5}Ba_{0.5}F₂ 1%] | AB [%] | Charge capacity [mAh/g] | Discharge capacity [mAh/g] |
|---|---|---|---|---|---|---|---|
| Example 1 | 3.88 | 31 | 8 | 58 | 3 | 139 | 101 |
| Example 2 | 1.79 | 25 | 14 | 58 | 3 | 177 | 138 |
| Example 3 | 1.05 | 20 | 19 | 58 | 3 | 204 | 187 |
| Example 4 | 0.34 | 10 | 29 | 58 | 3 | 273 | 252 |
| Example 5 | 0.15 | 5 | 34 | 58 | 3 | 346 | 320 |
| Comparative Example 1 | 0.08 | 3 | 36 | 58 | 3 | 0 | 0 |
| Comparative Example 2 | 0.03 | 1 | 38 | 58 | 3 | 0 | 0 |
| Comparative Example 3 | 0.08 | 3 | 36 | 54 | 7 | 75 | 38 |
| Comparative Example 4 | - | 39 | 0 | 58 | 3 | 78 | 71 |

As shown in Table 1, FIG. 2, and FIG. 3, the charge and discharge capacities of fluoride-ion batteries of the Examples, wherein Mg/MgF2 was set within the range of the present disclosure, were large.

Although not intended to be bound by any theory, the reason therefore is believed to be as follows. Specifically, as the first-stage reaction during charging, MgF₂ is initially reacted to release fluoride ions and generate Mg. As the second-stage reaction, Mg in the negative electrode mixture comprising Mg generated in the first stage then forms an alloy with Ca and Ba in Ca₁₋ₓBaₓF₂ and releases fluoride ions. This reverse reaction during discharging causes the occlusion of fluoride ions. In other words, it is believed that high charge and discharge capacities are obtained due to the occurrence of the two stages of release (charging) and occlusion (discharging) of fluoride ions.

In the above mechanism, it is considered that the smaller the Mg/MgF2 ratio, the higher the theoretical capacity. However, the actual charge and discharge capacities were the largest in a composition comprising a small amount of Mg (Example 5). On the other hand, charging and discharging could not be carried out when Mg/MgF2 was less than the lower limit of the range of the present disclosure, even when Mg was contained (Comparative Examples 1 and 2). Presumably, this is because the blended Mg also functions as an electron conductive aid and the blending of a small amount of Mg contributes to efficient charging and discharging. This presumption is considered to be supported by Comparative Example 3, wherein Mg/MgF2 was set smaller than the range of the present disclosure and the ratio of AB as an electron conductive aid was increased, in that although the values of the charge and discharge capacities were smaller compared to the Examples, charging and discharging could be carried out.

### <Examples 6 to 10 and Comparative Example 5>

Except that the rotational speeds and times of ball mill (BM) mixing in the production of the negative electrode mixture were changed as indicated in Table 2, all-solid-state fluoride-ion batteries of Examples 6 to 10 and Comparative Example 5 were produced in the same manner as in Example 4.

### <Effect of MgF₂ crystallinity>

In order to examine the effect of crystallinity of MgF₂ in the negative electrode mixture on charge and discharge capacities, charge-discharge tests and XRD measurements were carried out on the negative electrode mixtures obtained in Examples 4 and 6 to 10 and Comparative Example 5. The method of the charge-discharge test is as described above, and the method of XRD measurement is as indicated below.

### (XRD measurement)

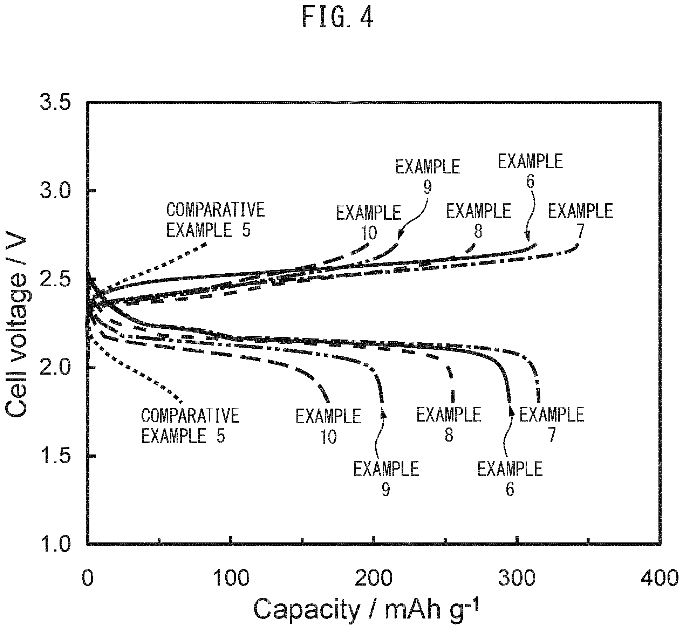

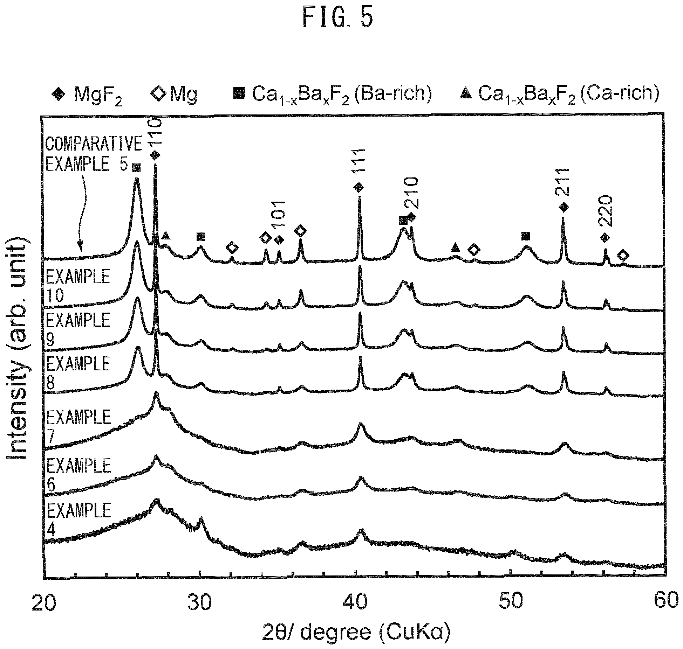

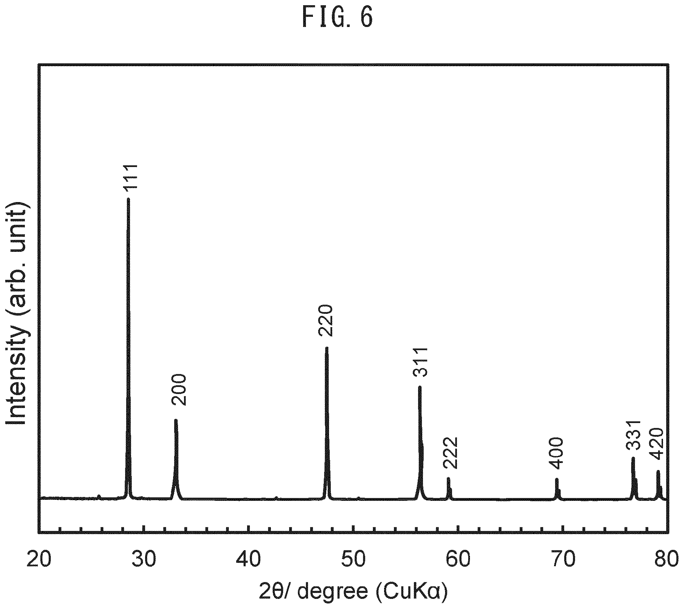

Measurements were carried out by a parafocusing method with CuKa radiation, using the SmartLab apparatus manufactured by Rigaku Corporation, under conditions of a tube voltage of 45 kV and a tube current of 200 mA. The above reference material CeO₂ was measured under the same conditions. Each of the resulting XRD patterns shown in FIGS. 4 and 5 was subjected to pattern fitting analysis using the analysis software PDXL made by Rigaku Corporation to calculate the half width FWHM. The results are shown in Table 2 and FIG. 6.

**[Table 2]**

| Example | BM rotational speed [rpm] | BM time [h] | FWHM_{sam.} [deg.] | FWHM_{sam.} /FWHM_{ref.} | Charge capacity [mAh/g] | Discharge capacity [mAh/g] |
|---|---|---|---|---|---|---|
| Example 4 | 600 | 3 | 0.691 | 9.68 | 273 | 252 |
| Example 6 | 500 | 3 | 0.601 | 8.42 | 314 | 295 |
| Example 7 | 400 | 3 | 0.572 | 8.01 | 343 | 315 |
| Example 8 | 300 | 3 | 0.139 | 1.95 | 271 | 255 |
| Example 9 | 300 | 2 | 0.121 | 0.69 | 216 | 205 |
| Example 10 | 300 | 1 | 0.116 | 1.62 | 196 | 168 |
| Comparative Example 5 | 200 | 3 | 0.0961 | 1.35 | 83 | 80 |

As shown in Table 2 and FIG. 6, the charge and discharge capacities of fluoride-ion batteries of the Examples, wherein FWHMsam./FWHMref. was set to greater than 1.5 by reducing the crystallinity of MgF₂ in the negative electrode mixture, were large.

Although not intended to be bound by any theory, the reason therefor is believed to be that when crystallinity of MgF₂ crystals is reduced (crystallite size is decreased), fluoride-ion diffusion length in the active material particles of MgF₂ is shortened, and charge and discharge reactions proceed efficiently.

### REFERENCE SIGNS LIST

- 1: fluoride-ion battery
- 10: positive electrode current collector layer
- 20: positive electrode active material layer
- 30: electrolyte layer
- 40: negative electrode active material layer
- 50: negative electrode current collector layer

## Claims

1. A fluoride-ion battery, comprising a positive electrode active material layer, a negative electrode active material layer, and an electrolyte layer formed between the positive electrode active material layer and the negative electrode active material layer, wherein
the negative electrode active material layer contains metallic magnesium, magnesium fluoride, and calcium barium fluoride, and
a mass ratio of the metallic magnesium to the magnesium fluoride is 0.1 to 10.0.

2. The fluoride-ion battery according to claim 1, wherein a ratio of a first FWHM (XRD half width) of a peak near 2θ = 40.4 deg. in an XRD spectrum of the magnesium fluoride to a second FWHM (XRD half width) of a peak near 2θ = 47.5 deg. in an XRD spectrum of NIST standard CeO2, measured using CuKa radiation, is 1.5 or greater.

3. The fluoride-ion battery according to claims 1 or 2, wherein the electrolyte layer comprises calcium barium fluoride.

4. The fluoride-ion battery according to any one of claims 1 or 2, wherein charge and discharge capacities are 100 mAh/g or more.

5. A negative electrode active material for a fluoride-ion battery, comprising magnesium fluoride, wherein
a ratio of a first FWHM (XRD half width) of a peak near 2θ = 40.4 deg. in an XRD spectrum of the magnesium fluoride to a second FWHM (XRD half width) of a peak near 2θ = 47.5 deg. in an XRD spectrum of NIST standard CeO2, measured using CuKa radiation, is 1.5 or greater.

6. A method for manufacturing the negative electrode active material according to claim 5, comprising applying mechanical impact to magnesium fluoride to change a ratio of a first FWHM (XRD half width) of a peak near 2θ = 40.4 deg. in an XRD spectrum of the magnesium fluoride to a second FWHM (XRD half width) of a peak near 2θ = 47.5 deg. in an XRD spectrum of NIST standard CeO2, measured using CuKa radiation, to 1.5 or greater.

7. The method according to claim 6, wherein the mechanical impact is applied by a ball mill.

8. The method according to claim 7, wherein a rotational speed of the ball mill is 300 rpm or more.
